# EUROPÄISCHE PATENTANMELDUNG

(11) **EP 4 424 741 A1**
(43) Veröffentlichungstag der Anmeldung: **04.09.2024**
(21) Anmeldenummer: 23159763.4
(22) Anmeldetag: 02.03.2023
(51) Int. Cl.: C08G 59/40, C08G 59/66, C08G 59/68, C08L 63/00, C09K 21/14, C08J 9/00

(54) **EPOXY-THIOL BASIERTES REAKTIONSGEMISCH ZUR HERSTELLUNG EINES BRANDSCHUTZELEMENTS, DARAUS HERGESTELLTES BRANDSCHUTZELEMENT UND VERFAHREN ZUR HERSTELLUNG EINES BRANDSCHUTZELEMENTS**

(71) Anmelder: Hilti Aktiengesellschaft, 9494 Schaan (LI)
(72) Erfinder: Wehner, Marius, 82061 Neuried (DE); Conceicao Alves Juster, Filipa, 86899 Landsberg am Lech (DE); Paetow, Mario, 86899 Landsberg am Lech (DE); Reineck, Marie, 86916 Kaufering (DE)
(74) Vertreter: Hilti Aktiengesellschaft Corporate Intellectual Property

(57) **Zusammenfassung**

Die vorliegende Erfindung betrifft ein schäumbares Epoxy-Thiol basiertes Reaktionsgemisch zur Herstellung von vorgeformten Brandschutzelementen sowie ein aus dem erfindungsgemäßen Reaktionsgemisch hergestelltes Brandschutzelement. Ferner betrifft die Erfindung ein Verfahren zur Herstellung eines Brandschutzelementes und ein Bauteil umfassend ein erfindungsgemäßes Brandschutzelement. Das Reaktionsgemisch umfasst ein Epoxidharz und eine polyfunktionelle Thiolverbindung als Härter für das Epoxidharz.

## Beschreibung

Die vorliegende Erfindung betrifft ein schäumbares Epoxy-Thiol basiertes Reaktionsgemisch zur Herstellung von vorgeformten Brandschutzelementen sowie ein aus dem erfindungsgemäßen Reaktionsgemisch hergestelltes Brandschutzelement. Ferner betrifft die Erfindung ein Verfahren zur Herstellung eines Brandschutzelementes und ein Bauteil umfassend ein erfindungsgemäßes Brandschutzelement. Das Reaktionsgemisch umfasst ein Epoxidharz und eine polyfunktionelle Thiolverbindung als Härter für das Epoxidharz.

Beim Verlegen von Leitungen, wie z.B. Rohrleitungen, elektrische Leitungen und dergleichen, werden diese durch Durchgangsöffnungen in Bauelementen, insbesondere Gebäudebauteilen, wie Wände und Decken, geführt. Um den Durchtritt von Feuer und Rauchgasen im Brandfall zu verhindern, werden zwischen den Innenwänden der Durchgangsöffnungen und den hindurchgeführten Leitungen Brandschutzabschottungsmaterialen, wie beispielsweise Brandschutzkissen und Brandschutzsteine und Produkte für Fugenanwendungen, eingebracht.

Vorgeformte Brandschutzelemente, wie beispielsweise Brandschutzsteine, werden üblicherweise durch Mehrkomponentenextrusion und Aufschäumen in einer vordefinierten Form hergestellt. Vorgeformte Brandschutzelemente können als Formteile verwendet oder weiterverarbeitet werden. Hierzu wird im überwiegenden Teil der Fälle Polyurethan (PU) als Bindemittelmatrix verwendet.

Solche PU-basierten Brandschutzelemente sind aus HSE-Gesichtspunkten (HSE = Health, Safety and Enviroment) bedenklich, da diese durch die Verwendung von Isocyanaten hergestellt werden. Ein Beispiel solcher Isocyanate ist das Diphenylmethandiisocyanat, welches u.a. mit dem H-Satz H351 "Kann vermutlich Krebs erzeugen" gekennzeichnet ist.

Ein alternativer nicht-PU-basierter Brandschutzschaum auf der Grundlage einer Epoxy-Thiol-Formulierung für die Anwendung als Ortsschaum ist in EP 3696216 A1 beschrieben. Bei Ortsschäumen, die direkt auf der Baustelle zum Einsatz kommen, sind die Schäum- und Aushärtungsparameter von untergeordneter Relevanz, solange grundsätzlich akzeptable Aushärtezeiten erreicht werden. Bei der Produktion von vorgeformten Brandschutzelementen in (groß-)technischen Anlagen spielen allerdings solche Schäum- und Aushärtungsparameter, wie Beginn und Ende des Aufschäumens, die klebfreie Zeit und die Zeit zum Schneiden oder Entformen, eine wichtige Rolle, um die Produktion der vorgefertigten Brandschutzelemente effektiv durchführen zu können.

Es besteht daher ein großer Bedarf an der Bereitstellung von Reaktionsgemischen, welche zur Herstellung von vorgeformten, geschäumten Brandschutzelementen geeignet sind und die ohne den Einsatz von Isocyanaten auskommen.

Aufgabe der Erfindung ist es daher, ein Reaktionsgemisch zur Herstellung von vorgeformten, geschäumten Brandschutzelementen bereitzustellen, welches in der Herstellung ohne den Einsatz von Isocyanaten auskommt und damit die aus dem Stand der Technik bekannten Polyurethan-basierten Brandschutzelemente unter HSE-Gesichtspunkten übertrifft. Gleichzeitig sollen die vorgeformten Brandschutzelemente die Anforderungen an die Eigenschaften von vorgeformtem Brandschutzelemente für Brandschutzanwendungen in Gebäuden erfüllen. Die Brandschutzelemente sollen zumindest ein vergleichbares Brandschutzverhalten aufweisen, wie die aus dem Stand der Technik bekannten Polyurethan-basierten vorgeformten Brandschutzelemente. Zusätzlich sollen sich die erfindungsgemäßen Brandschutzelement durch eine verbesserte Herstellbarkeit auszeichnen: Insbesondere sollen hierbei die in der Herstellung benötigten Zeiten zum Aufschäumen, zum Erreichen der Tack-free-time und die Zeit bis zum Schneiden und Entformen verkürzt werden.

Die der Erfindung zu Grunde liegende Aufgabe wird gelöst durch ein Reaktionsgemisch gemäß Anspruch 1.

Ein zweiter Gegenstand der Erfindung ist auch ein Verfahren zur Herstellung eines vorgeformten Brandschutzelements.

Ein dritter Gegenstand der Erfindung ist ferner ein aus dem erfindungsgemäßen Reaktionsgemisch oder ein durch das erfindungsgemäße Verfahren hergestelltes Brandschutzelement.

Ein vierter Gegenstand der Erfindung ist auch ein Bauteil umfassend ein erfindungsgemäßes Brandschutzelement.

Zum besseren Verständnis der Erfindung werden die folgenden Erläuterungen der hierin verwendeten Terminologie als sinnvoll erachtet. Im Sinne der Erfindung bedeutet:
- eine *"polyfunktionelle Thiolverbindung"* eine Verbindung die mindestens zwei Thiolgruppen (-SH) aufweist, die an ein organisches Grundgerüst gebunden sind;
- *"Reaktionsgemisch"* ist eine Zusammensetzung, umfassend mindestens ein härtbares Epoxidharz, mindestens eine polyfunktionelle Thiolverbindung, mindestens ein dämmschichtbildendes Additiv, mindestens einen Katalysator und mindestens ein Treibmittel. Dem Fachmann ist bekannt, dass beim Zusammenführen der einzelnen Bestandteile des Reaktionsgemisches sowohl eine Härtungs- als auch eine Schäumungsreaktion eintritt. Mit dem Begriff Reaktionsgemisch im Sinne der vorliegenden Erfindung sind daher alle Reaktionszustände von der initialen Mischung der Bestandteile bis zum Ablauf der vollständigen Härtungsreaktion umfasst.
- *"chemische Intumeszenz"* die Bildung einer voluminösen, isolierenden Ascheschicht durch aufeinander abgestimmte Verbindungen, die bei Hitzeeinwirkung miteinander reagieren;
- *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;
- *"dämmschichtbildend",* dass im Brandfall ein fester mikroporöser Kohleschaum entsteht, so dass die gebildete feinporige und dicke Schaumschicht, die sogenannte Aschekruste, je nach Zusammensetzung ein Substrat gegen Hitze isoliert;
- Treibmittel ein Sammelbegriff für physikalische und chemische Treibmittel. Im Falle von chemischen Treibmitteln werden Treibmittelmischungen eingesetzt, die mindestens zwei Komponenten umfassen, die bei Kontaktierung miteinander die Bildung von Gasen als Treibmitteln hervorrufen, was zur Schäumung der Zusammensetzung führt.
- *"ein", "eine", "einer"* als Artikel vor einer chemischen Verbindungsklasse, z.B. vor dem Wort "Epoxid", dass eine oder mehrere unter diese chemische Verbindungsklasse fallende Verbindungen, z.B. verschiedene Epoxide gemeint sein können. In einer bevorzugten Ausführungsform ist mit diesem Artikel nur eine einzelne Verbindung gemeint;
- *"mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus",*

Durch die Verwendung eines Epoxidharzes in Kombination mit einer polyfunktionellen Thiolverbindung als Härter für das Epoxidharz kann bei der Herstellung von vorgeformten Brandschutzelementen auf die Verwendung von gesundheitsgefährdenden und kennzeichnungspflichtigen Isocyanaten vollständig verzichtet werden kann. Die aus dem erfindungsgemäßen Reaktionsgemisch hergestellten Brandschutzelemente zeichnen sich durch verbesserte Herstellungseigenschaften aus. Insbesondere können die in der Herstellung benötigten Zeiten zum Aufschäumen, zum Erreichen der Tack-free-time und zum Schneiden und Entformen signifikant verkürzt werden.

### Epoxidharz

Das erfindungsgemäße Reaktionsgemisch umfasst mindestens ein härtbares Epoxidharz. Als Epoxidharz sind in der Epoxychemie übliche Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen. Grundlegende Informationen zu und Beispiele für Epoxidharze sind dem Kapitel " Epoxy Resins" der Encyclopedia of Polymer Sciences and Technology, Vol. 9, Wiley-Interscience, 2004 , zu entnehmen. Als geeignete Epoxidharze seien beispielhaft erwähnt Reaktionsprodukte von Polyhydroxyverbindungen, insbesondere mehrwertige Phenole oder Phenol-Aldehyd-Kondensate, mit Epihalogenhydrinen oder deren Vorläufern, insbesondere:
a) Reaktionsprodukte von Epichlorhydrin mit Bisphenol A;
b) Reaktionsprodukte von Epichlorhydrin mit Bisphenol F;
c) Epoxy-Novolake auf Phenol- oder Cresolbasis;
d) Aromatische Glycidylaminharze;
e) Epoxidharze ohne aromatische Struktureinheiten;
sowie Gemische zweier oder mehrerer derartiger Epoxidharze in beliebigem Verhältnis und in beliebigen Reinheitsgraden.

Als Epoxidharz besonders geeignet sind sogenannte Polyepoxid-Flüssigharze, im Folgenden als "Flüssigharz" bezeichnet. Diese weisen eine Glasübergangstemperatur auf, welche üblicherweise unterhalb von 25°C liegt, im Unterschied zu den sogenannten Festharzen, welche eine Glasübergangstemperatur oberhalb von 25°C aufweisen und sich zu bei 25°C schüttfähigen Pulvern zerkleinern lassen. Geeignete Verbindungen sind die Glycidylisierungsprodukte von:
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenyl-ethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxy-naphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M);
- sowie Gemische zweier oder mehrerer derartiger Epoxidharze in beliebigem Verhältnis und in beliebigen Reinheitsgraden.

Weiter bevorzugt im Sinne der Erfindung sind Reaktionsprodukte von Epichlorhydrin mit Bisphenol A mit einem Epoxidäquivalentmasse (EEW) ≤ 550 g/EQ; Reaktionsprodukte von Epichlorhydrin mit Bisphenol F, dem einfachsten Vertreter der Novolake, mit einem EEW ≤ 500 g/EQ; beliebige Gemische dieser beiden Reaktionsprodukte, Reaktionsprodukte eines beliebigen Gemisches von Bisphenol A und Bisphenol F mit Epichlorhydrin, Epoxidharze wie Hydantoin-basierte Epoxidharze oder Diglycidylether von hydriertem Bisphenol A oder Bisphenol F; sowie Gemische zweier oder mehrerer derartiger Epoxidharze in beliebigem Verhältnis und in beliebigen Reinheitsgraden.

Besonders bevorzugt sind Reaktionsprodukte von Epichlorhydrin mit Bisphenol A mit einem EEW ≤ 330 g/EQ; Reaktionsprodukte von Epichlorhydrin mit Bisphenol F, dem einfachsten Vertreter der Novolake, mit einem EEW ≤ 300 g/EQ, beliebige Gemische dieser beiden Reaktionsprodukte, Reaktionsprodukte eines beliebigen Gemisches von Bisphenol A und Bisphenol F mit Epichlorhydrin mit einem EEW ≤ 330 g/EQ, 5,5-Dimethyl-1,3-bis(2,3-epoxypropyl)-2,4-imidazolidindion; 2,2-Bis[4-(2,3-epoxypropoxy)-cyclohexyl]propan; sowie Gemische zweier oder mehrerer derartiger Epoxidharze in beliebigem Verhältnis und in beliebigen Reinheitsgraden.

Ganz besonders bevorzugt sind Reaktionsprodukte von Epichlorhydrin mit Bisphenol A mit einem EEW ≤ 200 g/EQ, wie beispielsweise Epilox^{®} A 17-01, Epilox^{®} A 18-00, Epilox^{®} A 19-00, Epilox^{®} A 19-02, Epilox^{®} A 19-03 oder Epilox^{®} A 19-04 der Leuna-Harze GmbH, dargestellt durch die nachfolgende Formel, worin 0 ≤ n ≤ 0,2;

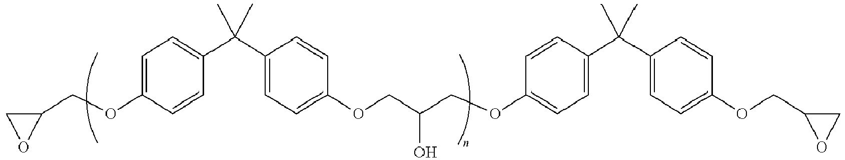

Reaktionsprodukte von Epichlorhydrin mit Bisphenol F, dem einfachsten Vertreter der Novolake, mit einem EEW ≤ 185 g/EQ, wie beispielsweise Epilox^{®} F 16-01 oder Epilox^{®} F 17-00 der Leuna-Harze GmbH, dargestellt durch die nachfolgende Formel, worin 0 ≤ n ≤ 0,2; 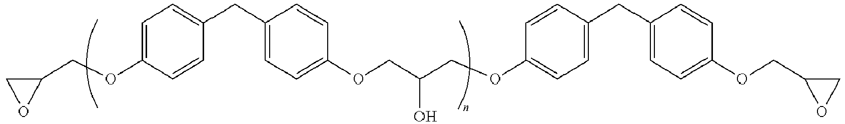 sowie Gemische zweier oder mehrerer derartiger Epoxidharze in beliebigem Verhältnis und in beliebigen Reinheitsgraden, wie beispielsweise Epilox^{®} AF 18-30, Epilox^{®} 18-50 oder Epilox^{®} T 19-27 der Leuna-Harze GmbH, sowie Reaktionsprodukte eines beliebigen Gemisches von Bisphenol A und Bisphenol F mit Epichlorhydrin mit einem EEW ≤ 200 g/EQ.

Als Epoxidharz eignet sich auch ein aliphatisches oder cycloaliphatisches Polyepoxid, wie beispielsweise:
- ein Glycidylether eines gesättigten oder ungesättigten, verzweigten oder unverzweigten, zyklischen oder offenkettigen C₂ - bis C₃₀ -Diols, wie beispielsweise Ethylenglykol, Propylenglykol, Butylenglykol, Hexandiol, Octandiol, ein Polypropylenglykol, Dimethylolcyclohexan, Neopentylglykol oder Dibromoneopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythritol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Als Epoxidharz möglich sind auch ein Bisphenol A-, F- oder A/F-Festharz, welches ähnlich aufgebaut ist wie die bereits genannten Flüssigharze der obigen beiden Formeln, aber anstelle des Index n einen Wert von 2 bis 12 aufweist, und eine Glasübergangstemperatur oberhalb von 25°C aufweist.

Als Epoxidharz eignen sich schließlich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Das Epoxid-Äquivalentgewicht ist die Menge des Epoxidharzes in [g], die eine äquivalente [EQ] Epoxidfunktion aufweist und aus der Molmasse M in [g/mol] geteilt durch die Funktionalität f in [EQ/mol] berechnet wird; (EEW [g/EQ])

Im Rahmen der vorliegenden Erfindung kann das relative Verhältnis von Epoxidharzen zu polyfunktionellen Thiolverbindungen durch das reaktive Äquivalentverhältnis charakterisiert werden, das das Verhältnis der Anzahl aller Epoxidgruppen in der Zusammensetzung zur Anzahl der Thiolgruppen in der Zusammensetzung ist. Das reaktive Äquivalentverhältnis beträgt 0,1 bis 10:1, vorzugsweise 0,2 bis 5:1, noch bevorzugter 0,3 bis 3:1, noch bevorzugter 0,4 bis 2:1 und noch bevorzugter 0,4 bis 1,5:1.

Je nach Funktionalität des Epoxidharzes können der Vernetzungsgrad des Brandschutzelementes und somit zum einen die Festigkeit des entstehenden Brandschutzelementes, als auch dessen elastische Eigenschaften eingestellt werden.

### Polyfunktionelle Thiolverbindung

Das Reaktionsgemisch umfasst mindestens eine polyfunktionelle Thiolverbindung. Polyfunktionell bedeutet im Sinne der vorliegenden Erfindung, dass die Verbindung mindestens zwei Thiolgruppen aufweist. Zweckmäßig kann jede Thiolverbindung mit mindestens zwei Thiolgruppen verwendet werden. Bevorzugt handelt es sich dabei um Thiol-funktionalisierte Verbindungen, wobei die Thiol-Gruppe (-SH) die funktionelle Gruppe bildet.

Jede Thiolgruppe ist dabei entweder direkt oder über einen Linker an ein Gerüst angebunden. Die Thiol-funktionalisierte Verbindung der vorliegenden Erfindung kann über irgendeines einer breiten Vielzahl von Gerüsten verfügen, wobei diese gleich oder unterschiedlich sein können.

Vorzugsweise ist das Gerüst ein Monomer, ein Oligomer oder ein Polymer.

In einigen Ausführungsformen der vorliegenden Erfindung umfassen die Gerüste Monomere, Oligomere oder Polymere mit einem Molekulargewicht (M_{w}) von 50.000 g/mol oder weniger, bevorzugt 25.000 g/mol oder weniger, stärker bevorzugt 10.000 g/mol oder weniger, noch stärker bevorzugt 5.000 g/mol oder weniger, noch stärker bevorzugt 2.000 g/mol oder weniger, und am stärksten bevorzugt 1.000 g/mol oder weniger.

Als Monomere, die die als Gerüste geeignet sind, können beispielhaft Alkandiole, Alkylenglykole, Zucker, mehrwertige Derivate davon oder Gemische davon und Amine, wie Ethylendiamin und Hexamethylendiamin, und Thiole erwähnt werden. Als Oligomere oder Polymere, die als Gerüste geeignet sind, können folgende beispielhaft erwähnt werden: Polyalkylenoxid, Polyurethan, Polyethylenvinylacetat, Polyvinylalkohol, Polydien, hydriertes Polydien, Alkyd, Alkydpolyester, (Meth)acrylpolymer, Polyolefin, Polyester, halogeniertes Polyolefin, halogenierter Polyester, Polymercaptan, sowie Copolymere oder Gemische davon.

In einer bevorzugten Ausführungsform der Erfindung ist das Gerüst ein mehrwertiger Alkohol oder ein mehrwertiges Amin, wobei diese monomer, oligomer oder polymer sein können. Stärker bevorzugt ist das Gerüst ein mehrwertiger Alkohol. Als mehrwertige Alkohole, die als Gerüste geeignet sind, können dabei folgende beispielhaft erwähnt werden: Alkandiole, wie Butandiol, Pentandiol, Hexandiol, Alkylenglykole, wie Ethylenglykol, Propylenglykol und Polypropylenglykol, Glycerin, 2-(Hydroxymethyl)propan-1,3-diol,1,1,1-Tris(hydroxymethyl)ethan, 1,1,1-Trimethylolpropan, Di(trimethylolpropan), Tricyclodecandimethylol, 2,2,4-Trimethyl-1,3-pentandiol, Bisphenol A, Cyclohexandimethanol, alkoxylierte und/oder ethoxylierte und/oder propoxylierte Derivate von Neopentylglykol, Tertraethylenglykolcyclohexandimethanol, Hexandiol, 2-(Hydroxymethyl)propan-1,3-diol, 1,1,1-Tris(hydroxymethyl)ethan, 1,1,1-Trimethylolpropan und Rizinusöl, Pentaerythritol, Zucker, mehrwertige Derivate davon oder Gemische davon.

Als Linker können beliebige Einheiten, welche geeignet sind, Gerüst und funktionelle Gruppe zu verbinden, verwendet werden. Für Thiol-funktionalisierte Verbindungen ist der Linker bevorzugt ausgewählt unter den Strukturen (I) bis (XI).
1: Bindung zur funktionellen Gruppe
2: Bindung zum Gerüst

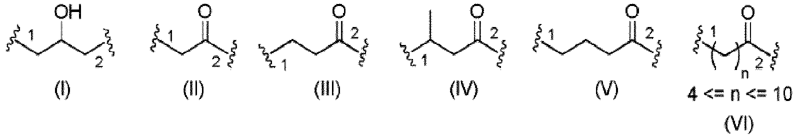

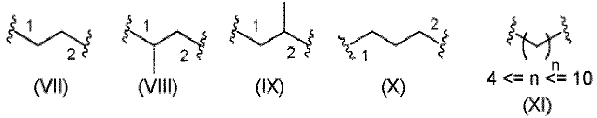

Als Linker für Thiol-funktionalisierte Verbindungen besonders bevorzugt sind die Strukturen (I), (II), (III) und (IV).

Besonders bevorzugte Thiol-funktionalisierte Verbindungen sind Ester der α-Thioessigsäure (2-Mercaptoacetate), β-Thiopropionsäure (3-Mercaptopropionate) und 3-Thiobuttersäure (3-Mercaptobutyrate) mit Monoalkoholen, Diolen, Triolen, Tetraolen, Pentaolen oder anderen Polyolen sowie 2-Hydroxy-3-mercaptopropylderivate von Monoalkoholen, Diolen, Triolen, Tetraolen, Pentaolen oder anderen Polyolen. Auch Gemische von Alkoholen können hierbei als Basis für die Thiol-funktionalisierte Verbindung verwendet werden.

Als besonders geeignete Thiol-funktionalisierte Verbindungen können beispielhaft erwähnt werden: Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-ercaptopropionat), Tris(hydroxymethyl)methan-tris(2-mercaptoacetat), Tris(hydroxymethyl)methan-tris(3-mercaptopropionat), 1,1,1-Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1-Trimethylolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertes Trimethylolpropan-tris(3-mercaptopropionat), 1,1,1-Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythritol-tris(3-mercaptobutyrat), Pentaerythritol-tetrakis(3-mercaptobutyrat), Capcure 3-800 (BASF), GPM-800 (Gabriel Performance Products), Capcure LÖF (BASF), GPM-800LO (Gabriel Performance Products), KarenzMT PE-1 (Showa Denko), 2-Ethylhexylthioglykolat, *iso-*Octylthioglykolat, Di(*n*-butyl)thiodiglykolat, Glykol-di-3-mercaptopropionat, 1,6-Hexandithiol, Ethylenglykol- bis(2-mercaptoacetat) und Tetra(ethylenglykol)dithiol.

Die Thiol-funktionalisierte Verbindung kann alleine oder als Gemisch von zwei oder mehreren, unterschiedlichen Thiol-funktionalisierten Verbindungen eingesetzt werden.

Je nach Funktionalität der Thiol-funktionalisierten Verbindung können der Vernetzungsgrad des Bindemittels und somit zum einen die Festigkeit des Brandschutzelements, als auch deren elastische Eigenschaften eingestellt werden.

In einer bevorzugten Ausführungsform der Erfindung werden Thiol-funktionalisierte Verbindungen mit einem Polysulfid-Grundgerüst verwendet werden. Die folgenden Bis-(ethylenoxy)-methan-Verbindungen mit Disulfidbrücken und reaktiven endständigen Mercaptangruppen (alle von Toray Fine Chemicals) können als Beispiel genannt werden: Thiokol^{®} LP3, Thiokol^{®} LP33, Thiokol^{®} LP23, Thiokol^{®} LP980, Thiokol^{®} LP2, Thiokol^{®} LP32, Thiokol^{®} LP12, Thiokol^{®} LP31, Thiokol^{®} LP55, Thiokol^{®} LP56. Bevorzugt werden Thiol-funktionalisierte Verbindungen mit einem Polysulfid-Grundgerüst in Kombination mit mindestens einer weiteren polyfunktionellen Thiolverbindung eingesetzt.

Erfindungsgemäß enthält das Reaktionsgemisch mindestens ein dämmschichtbildendes Additiv, wobei das Additiv sowohl eine einzelne Verbindung als auch ein Gemisch von mehreren Verbindungen umfassen kann.

Zweckmäßig werden als dämmschichtbildende Additive solche eingesetzt, die unter Hitzeeinwirkung aufblähen und eine isolierende Schicht aus schwerentflammbarem Material bilden. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch physikalische Intumeszenz gebildet werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Gasbildner, die häufig in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich der Gasbildner thermisch unter Bildung inerter Gase, die ein Aufblähen des carbonisierten (verkohlten) Materials und gegebenenfalls das erweichte Bindemittel unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Gasbildner und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Flammschutzmitteln üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, EO-Polyole, PO-Polyole sowie EO-PO-Polyole. Bevorzugt werden Pentaerythrit, Dipentaerythrit oder Polyvinylacetat eingesetzt.

Es sei erwähnt, dass das Polymer, welche als Bindemittel dient, im Brandfall selbst auch die Funktion eines Kohlenstofflieferanten haben kann, so dass die Zugabe eines zusätzlichen Kohlenstofflieferanten nicht immer erforderlich ist.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Gasbildner kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Gasbildner wirkt. Weitere Beispiele sind in der GB 2 007 689 A1, EP 139 401 A1 und US 3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkalationsverbindung, die auch als Blähgraphit bekannt sind. Diese können ebenfalls im Bindemittel, insbesondere homogen enthalten sein.

Als Blähgraphit kommen beispielsweise bekannte Einlagerungsverbindungen von Schwefelsäure, Salpetersäure, Essigsäure, Lewissäuren und/oder anderen starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, CO₂, H₂O, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt.

In einer weiteren Ausführungsform der Erfindung wird die isolierende Schicht sowohl durch chemische als auch durch physikalische Intumeszenz gebildet, so dass das dämmschichtbildende Additiv sowohl einen Kohlenstofflieferanten, einen Dehydrierungskatalysator und ein Gasbildner als auch thermisch expandierbare Verbindungen umfasst.

Prinzipiell kann das dämmschichtbildende Additiv in einem großen gewichtsprozentualen Bereich in dem Reaktionsgemisch enthalten sein, nämlich bevorzugt in einer Menge von 10 bis 70 Gew.-% bezogen auf das Gesamtgewicht des Reaktionsgemischs. Wird die isolierende Schicht durch physikalische Intumeszenz gebildet, ist das dämmschichtbildende Additiv vorzugsweise in einer Menge von 10 bis 40 Gew.-% bezogen auf das Gesamtgewicht des Reaktionsgemischs enthalten. Um hier eine möglichst hohe Intumeszenzrate zu bewirken, wird der Anteil des dämmschichtbildenden Additivs in der Gesamtformulierung so hoch wie möglich eingestellt, wobei darauf geachtet werden muss, dass die Viskosität der Zusammensetzung nicht zu hoch wird, damit sich die Zusammensetzung noch gut verarbeiten lässt. Bevorzugt beträgt der Anteil 12 bis 35 Gew.-% und besonders bevorzugt 15 bis 30 Gew.-%, bezogen auf das Gesamtgewicht des Reaktionsgemischs.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern. Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von <50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können dem erfindungsgemäßen Reaktionsgemisch ein oder mehrere Flammschutzmittel zugesetzt werden, wie Phosphatester, halogenhaltige Verbindungen wie z.B. Tri-(2-chlorisopropyl)-phosphat (TOPP), Tris(2-ethylhexyl)phosphat, Dimethylpropanphosphonat, Triethylphosphat und dergleichen. Einige solcher Verbindungen sind beispielsweise beschrieben in S. V Levchik, E. D Weil, Polym. Int. 2004, 53, 1901-1929 beschrieben. Die Flammschutzmittel können bevorzugt in einer Menge von 3 bis 6 Gew.-%, bezogen auf das gesamte Reaktionsgemisch, enthalten sein.

Erfindungsgemäß enthält das Reaktionsgemisch ein Treibmittel. Als Treibmittel kommen prinzipiell alle dem Fachmann bekannten chemischen und physikalischen Treibmittel in Betracht. Hierzu zählen insbesondere chemische Treibmittel, die in der Lage sind, CO₂ oder H₂ freizusetzen.

Vorzugsweise enthält das Reaktionsgemisch als Treibmittel mindestens eine Treibmittelmischung, welche ein oder mehrere Verbindungen umfasst, die in der Lage sind durch Reaktion Wasserstoff (H₂) freizusetzen.

Hierzu kann die Reaktion zwischen folgenden Verbindungen eingesetzt werden:
(i) einem oder mehreren unedlen Metallen (z.B. Aluminium, Eisen oder Zink) mit Basen (z.B. ein oder mehrere Alkalimetallhydroxide, wie Natrium-, Kalium- oder Lithiumhydroxid) oder mit ein oder mehreren Säuren, wie oben bei den Carbonaten definiert (vorzugsweise anorganische Säure);
(ii) Metallhydriden (z.B. Natriumhydrid oder Lithiumaluminiumhydrid) mit Wasser, oder
(iii) einer Verbindung, die Si-gebundene Wasserstoffatome aufweist (z.B. Polymethylhydrogensiloxan, bekannt auch als Polymethylhydrosiloxan, aber auch andere Polyalkyl- oder Polyarylhydrogensiloxane) mit Protonendonoren (z.B. Wasser). Geeignet sind u.a. lineare Polyhydrogensiloxane, Tetramere, Copolymere von Dimethysiloxan und Methylhydrosiloxan, Trimethylsilylterminierte Polyhydrogensiloxane, Hydrid-terminierte Polydimethylsiloxane, Triethylsilyl-terminierte Polyethylhydrosiloxane, Hydrid-terminierte Copolymere aus Polyphenylmethylsiloxan und Methylhydrosiloxan und dergleichen.

Hierbei ist die Verwendung einer Treibmittelmischung umfassend eine Verbindung, die Si-gebundene Wasserstoffatome aufweist bevorzugt. Besonders geeignete Si-H-haltige Verbindungen sind Organowasserstoffsiloxane wie Poly(methylhydrogensiloxan) (PMHS) mit unterschiedlichen M_{w}-Werten. Kommerziell erhältlich sind hier beispielsweise SilForce SS4300C (Momentive) und BLUESIL WR 68 (Elkem-Silikone).

Geeignete Protonendonatoren sind z. B. Wasser und OH-haltige Verbindungen, insbesondere solche mit geringerem Molekulargewicht wie z. B. Methanol, Ethanol, Propanol, Butanol, Pentanol, Hexanol, Heptanol, verwandte Diole wie z. B. (Tri)ethylenglykol und Propylenglykol, verwandte cyclische und aromatische Alkohole und Diole wie z. B. Cyclohexanol und Benzylalkohol sowie Mischungen davon).

In einer bevorzugten Ausführungsform der Erfindung umfasst die Treibmittelmischung der schäumbaren Mehrkomponenten-Zusammensetzung Polymethylhydrosilan und Wasser. Alternativ kann auch ein Wasser/1,4-Butandiol Gemisch eingesetzt werden.

Der Anteil der Si-H-haltigen Verbindung ist abhängig vom Molekulargewicht der Si-H-haltigen Verbindung und der Menge der darin enthaltenen Si-H-Bindungen. Im Falle des bevorzugt verwendeten Poly(methylhydrosiloxans) ergibt sich eine Höchstmenge von ca. 4 Gew.-% bezogen auf das Gesamtgewicht des Reaktionsgemischs, um geeignete Dichten für ein vorgeformtes Brandschutzelement zu erhalten. Eine weitere Erhöhung des Anteils Poly(methylhydrosiloxans) führt zu einer Erhöhung der Schaumhärte, d.h. zu einer Verringerung der Flexibilität, was hinsichtlich der Eigenschaften des vorgeformten Brandschutzelements nicht wünschenswert ist.

Erfindungsgemäß umfasst das Reaktionsgemisch einen Katalysator, der sowohl die Reaktion der Epoxidgruppen mit den Thiolgruppen als auch die Schäumungsreaktion begünstigt. Hierbei werden vorteilhaft keine (schwer-)metallbasierten Katalysatoren eingesetzt, da diese auch häufig gesundheitsgefährdend und kennzeichnungspflichtig unter HSE-Gesichtspunkten sind.

In einer bevorzugten Ausführungsform der Erfindung umfasst das Reaktionsgemisch eine organische Base als Katalysator. Dies begünstigt vorteilhaft das Schäumen und Aushärten des Reaktionsgemischs. Organische Basen sind vorteilhaft gegenüber anorganischen Basen, da sie üblicherweise nicht in Wasser gelöst werden müssen.

Bevorzugt ist die organische Base als Katalysator in einer Menge von 0-8 Gew.-%, insbesondere 1,5 bis 5 Gew.-% im Reaktionsgemisch enthalten bezogen auf das Gesamtgewicht des Reaktionsgemischs.

Bevorzugt ist die organische Base ausgewählt aus 1,1,3,3-tetramethylguanidine (TMG), 1-Phenylguanidin, 1,3,-Diphenylguanidin, 1-(o-Tolyl)biguanide, 1,5-diazabicyclo [4.3.0] - non-5-ene (DBN), 1,8-Diazabicyclo[5.4.0]-undec-7-ene (DBU), *N,N,N',N'*-Tetrakis(2-Hydroxypropyl)ethylenediamine (Quadrol ^{®}), 1,4-diazabicyclo[2.2.2]octane (DABCO), 4-Dimethylaminopyridine (DMAP), N,N,N',N",N"-pentamethyldiethylenetriamine (PMDETA), triethylamin, tributylamin und trioctylamin.

In einer besonders bevorzugten Variante dieser Ausführung ist die organische Base 1,1,3,3-Tetramethylguanidin (TMG).

Sofern erforderlich kann das erfindungsgemäße Reaktionsgemisch ferner einen Zellregulatur/-stabilisator enthalten. Als Zellregulaturen/-stabilisatoren eignen sich beispielsweise Alkylpolyglycoside. Diese sind nach dem Fachmann an sich bekannten Methoden durch Umsetzung von längerkettigen Monoalkoholen mit Mono-, Di- oder Polysacchariden erhältlich. Die längerkettigen Monoalkohole, die gegebenenfalls auch verzweigt sein können, weisen bevorzugt 4 bis 22 C-Atome, bevorzugt 8 bis 18 C-Atome und besonders bevorzugt 10 bis 12 C-Atome in einem Alkylrest auf. Im Einzelnen genannt seien als längerkettige Monoalkohole 1-Butanol, 1-Propanol, 1-Hexanol, 1-Oktanol, 2-Ethylhexanol, 1-Decanol, 1-Undecanol, 1-Dodecanol (Laurylalkohol), 1-Tetradecanol (Myristylalkohol) und 1- Octadecanol (Stearylalkohol). Es können auch Gemische der genannten längerkettigen Monoalkohole eingesetzt werden. Weitere Schaumstabilisatoren umfassen an sich bekannte anionische, kationische, amphotere und nichtionische Tenside sowie Mischungen hieraus. Bevorzugt werden Alkylpolyglycoside, EO/PO-Blockcopolymere, Alkyl- oder Arylalkoxylate, Siloxanalkoxylate, Polyether-Polysiloxane, Ester der Sulfobernsteinsäure und/oder Alkali- oder Erdalkalimetallalkanoate eingesetzt. Besonders bevorzugt werden EO/PO-Blockcopolymere eingesetzt.

In einer Ausführungsform enthält das Reaktionsgemisch ferner mindestens einen weiteren Bestandteil, ausgewählt unter Weichmachern, Vernetzungsmitteln, Bioziden, organischen und/oder anorganischen Zuschlagstoffen und/oder weiteren Additiven.

Das Reaktionsgemisch kann neben den bereits beschriebenen Additiven gegebenenfalls übliche Hilfsmittel wie Netzmittel, etwa auf Basis von Polyacrylaten und/oder Polyphosphaten, Farbstoffe, Fungizide, oder diverse Füllstoffe, wie Vermiculit, anorganische Fasern, Quarzsand, Mikroglaskugeln, Glimmer, Siliziumdioxid, Mineralwolle, und dergleichen enthalten.

Das erfindungsgemäße Reaktionsgemisch eignet sich in hervorragender Weise zur Herstellung von vorgeformten Brandschutzelementen. Der Einsatz eines erfindungsgemäßen Reaktionsgemischs verbessert die Herstellbarkeit von vorgeformten Brandschutzelementen, in dem die Aufschäumzeiten, die Zeit bis zum Erreichen der Tack-free-time und die Zeit bis zum Schneiden und Entformen verkürzt werden können.

Ein weiterer Gegenstand der vorliegenden Erfindung ist daher auch ein Verfahren zur Herstellung eines vorgeformten Brandschutzelements umfassend:
i) Bereitstellen einer Komponente A) durch Vermischen mindestens eines Epoxidharzes, mindestens eines dämmschichtbildenden Additivs, mindestens einer polyfunktionellen Thiolverbindung und mindestens eines Treibmittels,
ii) Bereitstellen mindestens eines Katalysators,
iii) Mischen der Komponente A) und des Katalysators zur Herstellung eines Reaktionsgemischs,
iv) Austragen des Reaktionsgemisches in eine Form oder eine Folie mit vordefinierter Geometrie;
v) Aufschäumen und Härten des Reaktionsgemisches und
vi) Entfernen des aufgeschäumten und ausgehärteten Reaktionsgemisches aus der Form oder der Folie.

Für das erfindungsgemäße Verfahren gelten in Bezug auf das Epoxidharz, das dämmschichtbildende Additiv, den Katalysator, das Treibmittel und die polyfunktionelle Thiolverbindung die vorstehenden Ausführungen in Bezug auf das Reaktionsgemisch in gleichem Maße.

Ein weiterer Gegenstand der vorliegenden Erfindung ist auch ein aus der erfindungsgemäßen Reaktionsmischung oder ein durch das erfindungsgemäße Verfahren hergestelltes Brandschutzelement. Unter dem Begriff "Brandschutzelement" im Sinne der vorliegenden Erfindung sind sämtliche Brandschutzabschottungsmaterialien in Gestalt eines definierten Formkörper zu verstehen, welche zum Schutz eines Feuerübertritts im Brandfall in Durchgangsöffnungen in Bauelementen, insbesondere Gebäudebauteilen, wie Wände und Decken, eingebracht werden. Hierzu zählen beispielsweise Brandschutzkissen, Brandschutzsteine und Profilelemente.

Das Brandschutzelement hat vorzugsweise einen rechteckigen Querschnitt. Dadurch lassen sich die Brandschutzelemente besonders einfach und lückenlos in einem Wand- oder Deckendurchbruch verarbeiten.

Die Brandschutzelemente können auf eine Länge von beispielsweise 80 cm zugeschnitten werden, um ein einfaches Handling beim Verpacken und beim Transport zu ermöglichen. Vor der Installation können die Profilstücke von einem Benutzer bei Bedarf zu kürzeren Stücken zugeschnitten werden.

Ebenfalls Gegenstand der Erfindung ist ein Bauteil, insbesondere ein Gebäudeteil umfassend ein erfindungsgemäßes Brandschutzelement.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

### AUSFÜHRUNGSBEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %-Angaben beziehen sich auf das Gesamtgewicht der beschriebenen Zusammensetzung als Kalkulationsbasis, soweit nicht anders angegeben.

Liste der in den Beispielen und Referenzen verwendeten Bestandteile (Erklärung der Abkürzungen) sowie ihrer Handelsnamen und Bezugsquellen:

**Tabelle 1: Zusammenstellung der in den Beispielen verwendeten Bestandteile**

| **Handelsname** | **Beschreibung** |
|---|---|
| Epilox^{®} F17-00 | Bisphenol F basiertes Epoxidharz |
| | Hersteller: Leuna Harze GmbH |
| Thiocure^{®} 333 | Ethoxyliertes Trimethylolpropane tris(3-mercaptopropionat); Dichte 1.144 g/cm³; |
| | Hersteller: Bruno Bock |
| Thiokol^{®} LP3 | Flüssiges Polysulfidepolymer (Bis-(ethyleneoxy))-methane, enthält Disulfidbrücken sowie reaktive terminale Thiolgruppen), |
| | Hersteller: Toray International Europe GmbH |
| Dämmschichtbildendes Brandschutzadditiv | Dämmschichtbildendes Brandschutzadditiv auf Basis von Blähgraphit, Eisenoxidpigment und Fungizid |
| Polyhydrogenmethylsiloxan (PHMS) | Bestandteil der Treibmittelmischung zur Bildung von H₂ |
| 1,1,3,3-Tetramethylguanidine | Organischer Katalysator |
| Ortegol^{®} 500 | Silikonfreier Zellöffner |
| | Hersteller: Evonik Nutrition & Care GmbH |
| 1,4-Butandiol | Thermo Fischer GmbH |
| Wasser | Leitungswasser |

Die Ausführungsbeispiele wurden entsprechend Tabelle 2 hergestellt. Zur Herstellung eines Schaums mit einer bestimmten Dichte wurde eine entsprechende Menge der angegebenen Komponenten nacheinander in einem geeigneten Behälter (z.B. Pappbecher) mit einem Holzspatel bis zur Ausbildung einer homogenen Mischung mechanisch verrührt. Der Holzspatel wurde entfernt und man ließ die Mischung in dem Behälter aufschäumen.

**Tabelle 2: Zusammensetzung des Vergleichsbeispiels in Anlehnung an Beispiel 3 der EP3696216 A1 und der erfindungsgemäßen Beispiele 1 bis 3 [in Gew.-%]**

| **Komponenten** | **Vergleichsbeispiel in Anlehnung an Beispiel 3 der** EP3696216 A1 | **Beispiel 1** | **Beispiel 2** | **Beispiel 3** |
|---|---|---|---|---|
| Epilox^{®} F17-00 | 20,99 | 19,5 | 20 | 19 |
| Thiocure^{®} 333 | 52,74 | 47 | 48 | 27 |
| Thiokol^{®} LP3 | - | - | - | 20 |
| Dämmschichtbildendes Brandschutzadditiv | 20 | 25 | 25 | 25 |
| Polymethylhydrosiloxan | 3,69 | 4 | 4 | 4 |
| 1,1,3,3-Tetramethylguanidin | 2,58 | 3 | 3 | 3 |
| Ortegol^{®} 500 | - | 1 | - | 1 |
| 1,4-Butandiol | - | - | - | 1 |
| Wasser | - | 0,5 | - | - |

In der nachfolgenden Tabelle 3 zeigt die Ergebnisse des Schäumungs- und Aushärteverhaltens des Vergleichsbeispiels und der erfindungsgemäßen Beispiele 1 bis 3.

**Tabelle 3: Zusammenfassung der Ergebnisse des Schäumungs- und Aushärteverhaltens des Vergleichsbeispiels und der erfindungsgemäßen Beispiele 1 bis 3.**

| | **Vergleichsbeispiel** | **Beispiel 1** | **Beispiel 2** | **Beispiel 3** |
|---|---|---|---|---|
| Zeit bis zu Beginn der Schaumbildung | 30 s | 0 s | 15 s | 0 s |
| Zeit bis zum Ende der Schaumbildung | 2,5 min | 1,25 min | 2 min | 2 min |
| Zeit bis zum Erreichen der Klebfreizeit (Tack-free time) | 2,5 min | 1.5 min | 2 min | 2 min |
| Zeit bis zum Erreichen der Schneidbarkeit | 3 min | 1.5 min | 2 min | 2 min |
| Entformzeit | 3 min | 1.5 min | 2 min | 2 min |
| Dichte | 166 g/L | 122 g/L | 172 g/L | 130 g/L |
| Schrumpf in der Höhe | 1.9% | 0.7% | 0.9% | 11.2% |
| Schrumpf in der Breite | 9.8% | 0% | 7.6% | 0% |
| Härte bei 40%iger Kompression mit d = 180 g/L | 6010 | 5000 | 6950 | 3660 |

### Experimentelles Vorgehen

### Bestimmung der Klebfreizeit (Tack-free time)

Nach der Zugabe der letzten Komponente wird die Zeit mit einer Stoppuhr gemessen. Zu mehreren Zeitpunkten wurde die Oberfläche des Schaums vorsichtig mit einem Polyethylenrohr berührt. Der Schaum ist klebfrei, sobald kein Schaum mehr am PE-Rohr kleben bleibt.

### Bestimmung der Zeit bis zur Entformung und Schneidbarkeit

Hierbei handelt es sich um die Zeit, die vom Einfüllen des Schaums in die Form bis zur manuellen Entnahme und/oder zum Schneiden mit einem elektrischen Sägeblatt vergeht, ohne dass es zu irreversiblen Strukturschäden kommt.

### Schrumpf

Unmittelbar nach dem vollständigen Aufschäumen wurde die Schaumhöhe an der höchsten Stelle gemessen. Nach einem Tag wurde die Schaumhöhe am höchsten Punkt erneut gemessen und mit der anfänglichen Schaumhöhe verglichen, um die Höhenschrumpfung in Prozent zu bestimmen.

Die Schaumbreite am oberen Rand des Behälters wurde mit der Gesamtbreite des Behälters nach einem Tag verglichen, um die prozentuale Schrumpfung in der Breite zu ermitteln.

### Schaumherstellung zur Durchführung von Brandschutztests

Die einzelnen Komponenten werden in einem geeigneten Behälter mechanisch vermischt, bis eine homogene Mischung erreicht ist. Anschließend wird das Gemisch in eine Form mit der gewünschten Form und den gewünschten Abmessungen gegossen, in der es aufschäumen und aushärten kann.

### Brandschutztest

Es wurde ein 120-minütiger Brandtest gemäß EN1366-3 (Anhang B) durchgeführt. Dazu wurden Durchbrüche in einer Porenbetonwand mit den Maßen 20 cm Länge, 20 cm Breite und 20 cm Tiefe, durch die sowohl ein E-Kabel (NYY 1x185 RM-J) mit einem Durchmesser von 25 mm als auch ein PP-Rohr (Rehau Raupiano Plus 40 × 1,8 mm, U/U) verlegt waren, mit vorgefertigten Brandschutzblöcken mit einer Größe von 20 cm × 13 cm × 5 cm abgedichtet. Die Lücken zwischen dem Kabel oder den Rohren und den vorgefertigten Brandschutzblöcken wurden mit einem handelsüblichen Brandschutzdichtungsmittel wie CFS-FIL (HILTI) abgedichtet. Die Temperatur auf der nicht brennenden Seite wurde mit Thermoelementen aufgezeichnet. Liegt der Temperaturanstieg auf der brandabgewandten Seite innerhalb von 90 bzw. 120 Minuten unter 180 K, ist der Brandtest nach EN 1366-3 (Anhang B) bestanden.

### Bestimmung der Schaumhärte (40%ige Kompression)

Für die Messung der Schaumhärte wird eine Zwick / Roell RetroLine Prüfmaschine (Fₘₐₓ = 2,5 kN) eingesetzt. Ausgehärtete Schaumproben mit einer Dicke von 2 cm werden mit einem Glaszylinder TA 10 von Brookfield (12,7 mm Durchmesser) zwei Druckzyklen bis 40 % mit einer Geschwindigkeit von 2 mm/s unterzogen. Die maximale Kraft, die im zweiten Zyklus erreicht wird, wird aufgezeichnet. Das Verfahren wird für mindestens eine weitere Probe wiederholt und die erhaltenen Werte werden gemittelt.

## Patentansprüche

1. Reaktionsgemisch zur Herstellung eines Brandschutzelements umfassend
i. mindestens ein härtbares Epoxidharz,
ii. mindestens eine polyfunktionelle Thiolverbindung,
iii. mindestens ein dämmschichtbildendes Brandschutz-Additiv,
iv. mindestens einen Katalysator und
v. mindestens ein Treibmittel.

2. Reaktionsgemisch gemäß Anspruch 1, **dadurch gekennzeichnet, dass** das härtbare Epoxidharz ausgewählt ist aus der Gruppe bestehend aus den Reaktionsprodukten von Epihalogenhydrinen mit Bisphenol A oder mit Bisphenol F oder mit Gemischen von Bisphenol A/Bisphenol F.

3. Reaktionsgemisch gemäß Anspruch 1 oder 2, **dadurch gekennzeichnet, dass** als polyfunktionelle Thiolverbindung mindestens eine Thiol-funktionalisierte Verbindung mit einem Polysulfid Grundgerüst verwendet wird.

4. Reaktionsgemisch gemäß einem der vorhergehenden Ansprüche, **dadurch gekennzeichnet, dass** das Treibmittel eine Treibmittelmischung mit Verbindungen umfasst, die nach deren Vermischen unter Bildung von Wasserstoff (H₂) miteinander reagieren.

5. Reaktionsgemisch gemäß Anspruch 4, **dadurch gekennzeichnet, dass** die Treibmittelmischung eine Verbindung mit Si-gebundenen Wasserstoffatomen aufweist.

6. Reaktionsgemisch gemäß Anspruch 5, **dadurch gekennzeichnet, dass** die Treibmittelmischung zusätzlich Wasser umfasst.

7. Reaktionsgemisch gemäß einem der vorhergehenden Ansprüche, **dadurch gekennzeichnet, dass** der Katalysator mindestens eine organische Base umfasst.

8. Reaktionsgemisch gemäß Anspruch 7, **dadurch gekennzeichnet, dass** die organische Base ausgewählt ist aus der Gruppe bestehend aus 1,4-diazabicyclo[2.2.2]octan, 1,8-Diazabicyclo[5.4.0]undec-7-en und 1,1,3,3-Tetramethylguanidin.

9. Reaktionsgemisch gemäß einem der vorhergehenden Ansprüche, **dadurch gekennzeichnet, dass** das dämmschichtbildende Brandschutzadditiv aus Graphit-Interkallationsverbindungen, blähfähigem silikatischen Material oder Kombinationen davon ausgewählt ist.

10. Verfahren zur Herstellung eines Brandschutzelements umfassend:
i) Bereitstellen einer Komponente A) durch Vermischen mindestens eines Epoxidharzes, mindestens eines dämmschichtbildenden Additivs, mindestens einer polyfunktionellen Thiolverbindung und mindestens eines Treibmittels,
ii) Bereitstellen mindestens eines Katalysators,
iii) Mischen der Komponente A) und des Katalysators zur Herstellung eines Reaktionsgemischs,
iv) Austragen des Reaktionsgemisches in eine Form oder eine Folie mit vordefinierter Geometrie;
v) Aufschäumen und Härten des Reaktionsgemisches und
vi) Entfernen des aufgeschäumten und ausgehärteten Reaktionsgemisches aus der Form oder der Folie.

11. Brandschutzelement hergestellt aus einer Reaktionsmischung gemäß einem der Ansprüche 1 bis 9 oder hergestellt durch das Verfahren gemäß Anspruch 10.

12. Brandschutzelement gemäß Anspruch 11, **dadurch gekennzeichnet, dass** das Brandschutzelement ein Brandschutzkissen, ein Brandschutzstein oder ein Profilelement ist.

13. Bauteil umfassend ein Brandschutzelement gemäß einem der Ansprüche 11 oder 12.
